## Europäisches Patentamt
## European Patent Office
## Office européen des brevets

(19)

(11) Veröffentlichungsnummer: **0 070 326**
**B1**

(12)

# EUROPÄISCHE PATENTSCHRIFT

(45) Veröffentlichungstag der Patentschrift:
**18.12.85**

(51) Int. Cl.⁴: **G 01 B 11/275**, G 01 B 11/26

(21) Anmeldenummer: **81105632.4**

(22) Anmeldetag: **17.07.81**

(54) Verfahren und Einrichtung zur Messung der Fahrwerkgeometrie von Kraftfahrzeugen.

(43) Veröffentlichungstag der Anmeldung:
**26.01.83 Patentblatt 83/4**

(45) Bekanntmachung des Hinweises auf die Patenterteilung:
**18.12.85 Patentblatt 85/51**

(84) Benannte Vertragsstaaten:
**AT BE CH DE FR GB IT LI LU NL SE**

(56) Entgegenhaltungen:
**EP - A - 0 007 808
DE - A - 2 539 577
DE - A - 2 840 708
US - A - 4 168 909**

(73) Patentinhaber: **Mirköz Diesel es Hütotechnikal Szövetkezet, Kobanyai ut 49/b, H-1101 Budapest (HU)**

(72) Erfinder: **Bordas, Istvan, Dr. Dipl.-Ing., Fehervari ut 101/a, 1119 Budapest (HU)**
Erfinder: **Gal, Pal, Dipl.-Ing., Fadrusz u. 12, 1114 Budapest (HU)**
Erfinder: **Eross, Attila, Dipl.-Ing., Bercsenyi u. 5, 1192 Budapest (HU)**

(74) Vertreter: **Füchsle, Klaus, Dipl.-Ing. et al, Hoffmann. Eitle & Partner Patentanwälte Arabellastrasse 4, D-8000 München 81 (DE)**

EP 0 070 326 B1

## Beschreibung

Die Erfindung bezieht sich auf ein Verfahren und Vorrichtungen zur Messung der Fahrwerkgeometrie von Kraftfahrzeugen.

Zur Messung der Fahrwerkgeometrie (Lenkgeometrie) bzw. der gegenseitigen Lage von einzelnen Punkten, insbesondere der Fahrwerke von Verkehrsmitteln, werden im allgemeinen optische Verfahren angewandt.

Die optischen Verfahren werden im Falle der Messung von Längendimensionsangaben nach dem Projektionsprinzip verwirklicht, bei dem die aus einem an einer Radachse ausgerichteten optischen Projektionssystem austretenden konvergenten Lichtstrahlen auf einem zweckdienlich angeordneten Projektionsschirm einander schneidend und hierbei meistens das Bild des Glühfadens einer Wolframlampe abbilden, von dessen auf der auf dem gleichen Projektionsschirm vorgesehenen Skala eingenommenen Stellung der zahlenmässige Wert der gemessenen geometrischen Angabe abgelesen werden kann.

Die Nachteile dieses Verfahrens ergeben sich daraus, dass der Abstand zwischen dem Projektionsschirm und dem optischen Projektionssystem, durch die verschiedenen Kraftwagentypen bedingt, unterschiedlich ist. Aus diesem Grund muss das Objektiv des optischen Projektionssystems im Interesse einer scharfen Abbildung jeweils eingestellt werden, so dass die geforderte Genauigkeit der Messung nur durch eine mit besonderer Sorgfalt erfolgende Geradführung des Objektivs eingehalten werden kann, wobei der im Verlaufe des betriebsmässigen Einsatzes auftretende Verschleiss die Ursache von im wesentlichen zufallsbedingten Fehlern werden kann und ferner die Änderung des Bildabstandes bei unveränderter Fahrwerkeinstellung das Ablesen verschiedener zahlenmässiger Werte der zu messenden geometrischen Angaben verursacht. Die Einstellung der Lenksymmetrie kann mit den bekannten optischen Verfahren nur indirekt und langwierig verwirklicht werden. Diese zur Rede stehenden Verfahren oder zumindest die Eichung (Kalibrierung) der zugehörigen Messgeräte erfordern darüber hinaus kombinierte Etalons und grosse Grundflächen.

So zeigt beispielsweise die EP-A 0 007 808 eine optische Einrichtung zum Messen der Ausrichtung von Fahrzeug-Radnaben. Die bekannte Vorrichtung weist eine an der ersten Nabe befestigte Vorrichtung mit Lichtquelle und Linsen- und Prismensystem auf, aus welcher in vertikaler Richtung konvergierende Lichtstrahlen austreten, die im wesentlichen die Richtung der Fahrzeugachse aufweisen. Die Lichtstrahlen treffen auf eine lichtempfindliche Einrichtung, wie Fotozellen auf, die an der zweiten Nabe der Radachse befestigt ist. Zudem ist eine Kontrolleinheit vorgesehen, welche die Signale von der Fotozelleneinheit auswertet und anzeigt. Die Nachteile dieser bekannten Einrichtung sind im wesentlichen die gleichen wie vorher aufgezeigt. So muss beispielsweise für verschiedene Spurbreiten eine die optische Einheit beeinflussende massstäbliche Veränderung vorgenommen werden.

Die zur Messung von Winkeldimensionen aufweisenden Angaben dienenden optischen Verfahren werden nach dem Projektionsprinzip verwirklicht, bei dem die Stelle des durch den aus dem im Vergleich zum Glühfaden der Wolframlampe fix angeordneten Objektiv austretenden konvergenten Lichtstrahlenbündel abgebildeten Bildes auf der Skala des Projektionsschrimes durch einen pendelartig aufgehängten und unter Einwirkung der Gravitation sich einstellenden Spiegel bestimmt wird.

Dieses Verfahren verlangt im Vergleich zu dem zur Messung von Angaben der Längendimension verwendeten Gerät den Einsatz eines weiteren Gerätes.

Ziel der Erfindung ist die Beseitigung der vorgenannten Nachteile der zur Messung der Geometrie von Kraftfahrzeug-Fahrwerken dienenden Verfahren durch die Entwicklung eines Verfahrens sowie von Vorrichtungen, mit deren Hilfe die Messungen mit höherer Genauigkeit, ohne kombinierte Etalons, mit einem geringen Grundflächenbedarf und einem einzigen Vorrichtungssystem einfach vorgenommen werden können.

Die Erfindung beruht auf der Erkenntnis, dass den vorstehenden Zielsetzungen entsprochen werden kann, wenn aus dem Objektiv eines im wesentlichen senkrecht zu einer Radachse an einer Radscheibe befestigten optischen System austretende Lichtstrahlen ein Parallelbündel bilden. Dieses Strahlenbündel wird bei der Messung von Angaben mit Längendimension von einem an einer anderen Radscheibe vorgesehenen Planspiegel und bei der Messung von Angaben mit Winkeldimension von einem in seiner Position durch die Gravitation bestimmten, im Vergleich zum Objektiv eine relative Lage aufweisenden Planspiegel so in sich reflektiert, dass das gleiche Objekt von diesem reflektierten Bündel auf einem mit Skaleneinteilung versehenen Projektionsschirm ein Bild abbildet, wobei sich die Lichtquelle fortbewegt, wodurch die Lichtquelle und deren Abbildung scheinbar in Deckung gelangen.

Dieses Verfahren beseitigt die Fehler der bekannten Verfahren aus folgenden Gründen:

- Es entfällt die wegen des veränderlichen Projektionsabstandes zur Einstellung der Bildschärfe erforderliche Objektivbewegung.
- Beim Ablesen des Gerätes befinden sich die Lichtquelle und deren Abbildung scheinbar in Deckung, wobei das parallel projizierte Lichtstrahlenbündel in sich reflektiert wird, so dass die Änderung des Projektionsabstandes das Messergebnis nicht beeinflusst.
- Die Lichtquelle und deren Bild müssen zum Ablesen des Gerätes scheinbar in Deckung gebracht werden, wobei diese Einstellung in Richtung einer weitgehenden Verminderung der subjektiven Messfehler wirkt.
- Das Verfahren ermöglicht die Anwendung des im Vergleich zu den Achsen der nicht gelenkten Räder erfolgenden direkten Messmethode.

– Zur Messung und zur Eichung des Messgerätes sind keine kombinierten Etalons und weiten Projektionsabstände erforderlich.

– Die selbe optische Vorrichtung eignet sich zur Messung von Angaben mit Längendimension und Angaben mit Winkeldimension.

Im Endergebnis können durch Anwendung des ein Parallellichtstrahlenbündel herstellenden und dieses in sich reflektierenden, optischen Verfahrens die geometrischen Angaben der Kraftfahrzeug-Fahrwerke auf einer höheren technischen Ebene gemessen werden.

Die Erfindung ist demgemäss zum einen ein Verfahren zur Messung der Geometrie von Kraftfahrzeug-Fahrwerken, bei dem ein in sich reflektiertes paralleles Lichtstrahlenbündel zur Anwendung gelangt. Das Wesentliche der Erfindung besteht darin, dass das Objektiv eines an einer Radscheibe befestigten optischen Systems aus den Strahlen einer Lichtquelle ein Parallelbündel bildet. Die Parallelstrahlen werden bei der Messung der eine Längendimension aufweisenden Angaben der Fahrwerksgeometrie (Radvorspur, Spurhaltung) von einem an einer anderen Radscheibe befestigten Planspiegel und bei der Messung der Angaben mit Winkeldimension (Sturz, Spreizung, Nachlauf) von einem im Vergleich zu einem in seiner Position durch die Gravitation bestimmten, im Vergleich zum Objektiv eine relative Lage aufweisenden Planspiegel so reflektiert, dass das gleiche Objektiv aus dem reflektierten Bündel auf einem mit Skaleneinteilung versehenen Projektionsschirm ein Bild abbildet, wobei sich die Lichtquelle fortbewegt, wobei die Lichtquelle und deren Abbildung scheinbar in Deckung gelangen.

Vorrichtungen zur Durchführung dieses Verfahrens ergeben sich aus den Ansprüchen 2 bis 4.

Die Erfindung wird detailliert anhand eines Ausführungsbeispiels unter Bezugnahme auf Zeichnungen beschrieben.

In den Zeichnungen zeigt:

Fig. 1 die das Verfahren verwirklichende Vorrichtung bei Messung der Radvorspur in Draufsicht,

Fig. 2 die Vorrichtung bei der Messung der Spurhaltung (Lenksymmetrie) in Draufsicht, und

Fig. 3 die Vorrichtung bei einer Winkelmessung in der Seitenansicht.

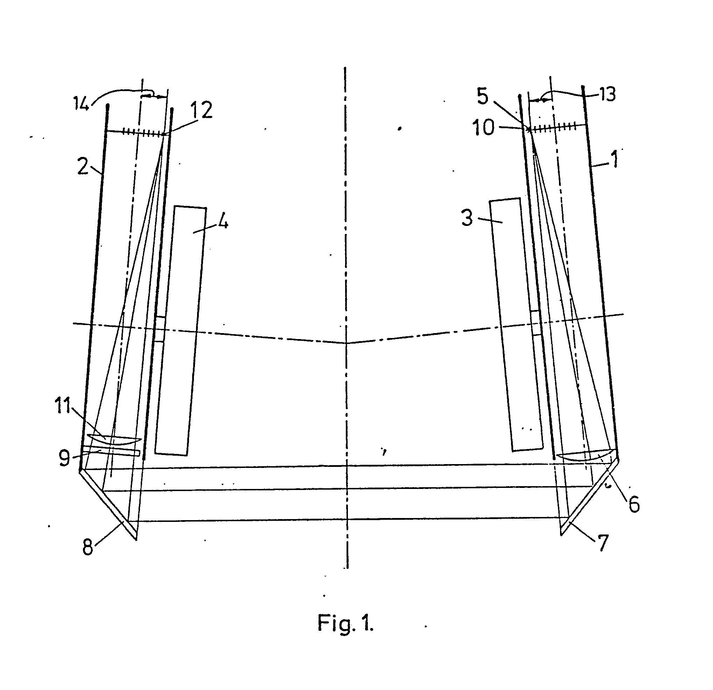

Aus Fig. 1 ist ersichtlich, dass die erfindungsgemässe Vorrichtung Tuben 1 und 2 umfasst, die in einer zu den Radachsen senkrechten Stellung an den Radscheiben 3 und 4 befestigt sind.

Aus den Lichtstrahlen des Glühfadens 5 bildet das Objektiv 6 ein Parallelbündel, das durch einen in einem Winkel von 45° stehenden Zubehör-Planspiegel 7 senkrecht zur Fahrrichtung des Kraftfahrzeuges auf einen ebenfalls in einem Winkel von 45° angeordneten Zubehör-Planspiegel 8 projiziert und dann von einem eine Reflexion von 50–70% aufweisenden Planspiegel 9 in sich reflektiert wird, worauf ein Objektiv 6 ein Glühfadenbild 10 abbildet, das mit dem Glühfaden 5 in Deckung liegt. Aus dem durch den Planspiegel 9 durchgelassenen Anteil von 50–30% des Parallelbündels bildet ein sich mit dem Planspiegel 9 zusammen drehendes Objektiv 11 ein Bild 12 ab.

Der Wert der Radvorspur ist dabei der Summe der von der optischen Achse messbaren Abweichung 13 und 14 der Abbildungen 10 und 12 direkt proportional.

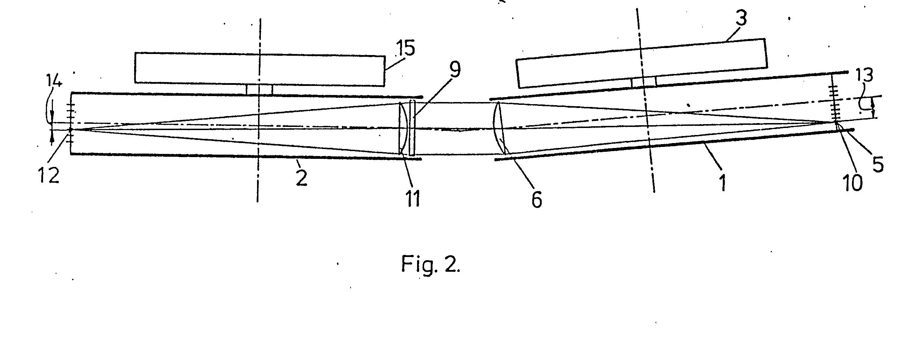

In Fig. 2 sind die Tuben 1 und 2 der erfindungsgemässen Vorrichtung in senkrechter Lage zu den Radachsen an den Radscheiben 3 und 15 befestigt. Aus den Lichtstrahlen des Glühfadens 5 bildet das Objektiv 6 ein Parallelbündel, das von dem eine Reflexion von 50–70% sichernden Planspiegel 9 in sich reflektiert wird, worauf das Objektiv 6 die Abbildung 10 erzeugt, die mit dem Glühfaden 5 in Deckung liegt. Aus den durch den Planspiegel 9 durchgelassenen Anteil von 50–30% des Parallelbündels bildet das sich mit dem Planspiegel 9 zusammen drehende Objektiv 11 das Bild 12.

Der sich auf die gemessenen Räder beziehende Teilwert der Vorspur der Vorderräder ist hier zur Differenz der von der optischen Achse messbaren Abweichung 13 und 14 der Bilder 10 und 12 direkt proportional.

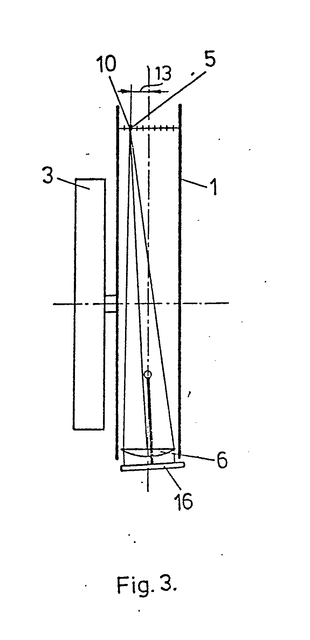

Bei Fig. 3 ist der Tubus 1 der erfindungsgemässen Vorrichtung in einer zur Radachse senkrechten Stellung an der Radscheibe 3 befestigt. Aus den Lichtstrahlen des Glühfadens 5 bildet das Objektiv 6 ein Parallelbündel, das von einem pendelartig aufgehängten und unter der Einwirkung der Gravitation sich fortbewegenden Planspiegel 16 in sich reflektiert wird und woraus das Objektiv 6 das Bild 10 abbildet. Der Radsturz ist zu der von der optischen Achse messbaren Abweichung 13 des Bildes 10 direkt proportional.

**Patentansprüche**

1. Verfahren zur Messung der Fahrwerkgeometrie von Kraftfahrzeugen, mit einer am Fahrwerk befestigten optischen Einrichtung, die eine Lichtquelle aufweist, die einen Lichtstrahl erzeugt, der mit Hilfe eines optischen Systems umgeformt wird, dadurch gekennzeichnet, dass der von der Lichtquelle (5) erzeugte Lichtstrahl durch das optische System (6, 7, 8, 9) in ein Parallelbündel umgeformt wird, wonach dieses in sich reflektiert wird, und dass das direkte und das reflektierte Licht der Lichtquelle innerhalb der optischen Einrichtung in eine gemeinsame Ebene abgebildet werden.

2. Vorrichtung zur Durchführung des Verfahrens nach Anspruch 1, mit an den beiden Radscheiben einer Radachse befestigten Tuben, einem an einer der Radscheiben montierten sowie in der Umgebung des einen Endes der Tuben angeordneten Planspiegel und Objektiven, dadurch gekennzeichnet, dass an einem Ende des ersten Tubus (1) durch ein Objektiv (6) abgeschlossen ist, dem vorgenannten Tubus in der Umgebung des Objektives (6) ein in einem Winkel von 45° zur Längsachse des Tubus (1) stehender Planspiegel (7) zugeordnet ist, dem gegenüber ein mit dem ersten in optischer Verbindung befindlicher und zur Längsachse des zweiten Tubus (2) ebenfalls in einem Winkel von 45° angeordneter zweiter Planspiegel (8) vorgesehen ist, und an diesem Ende des zweiten Tubus (2) ein zur Längsachse des genannten Tubus senkrechter, eine Reflexion von 50–70% aufweisender Planspiegel (9) und ein weiteres Objektiv (11) angeordnet sind.

3. Vorrichtung zur Durchführung des Verfahrens nach Anspruch 1, mit an den Radscheiben der Räder zweier Radachsen befestigten Tuben, einem in dem einen Tubus montierten Glühfaden, in der Umgebung des einen Endes der Tuben angeordneten Objektiven und einem einzigen Planspiegel, dadurch gekennzeichnet, dass der Glühfaden (5) an dem einen Ende des ersten Tubus (1) vorgesehen ist, das entgegengesetzte Ende dieses Tubus (1) durch das Objektiv (6) abgegrenzt wird und das damit in optischer Verbindung befindliche zweite Objektiv (11) am Ende des zweiten Tubus (2) hinter einem Planspiegel (9) mit einer Reflexion von 50–70% angeordnet ist.

4. Vorrichtung zur Durchführung des Verfahrens nach Anspruch 1, mit senkrecht angeordnetem Tubus, Glühfaden, Planspiegel und Objektiven, dadurch gekennzeichnet, dass am oberen Ende des Tubus (1) der Glühfaden (5) angeordnet ist und das untere Ende dieses Tubus (1) durch das Objektiv (6) abgegrenzt wird, unter dem ein pendelartig aufgehängter Planspiegel (16) angeordnet ist.

## Claims

1. Method for measuring the wheel alignment of vehicles, comprising an optical arrangement secured on the wheels which has a light source which produces a light beam which is converted with the aid of an optical system, characterized in that the light beam produced by the light source (5) is converted by the optical system (6, 7, 8, 9) into a parallel bundle, whereafter this is reflected, and in that the direct and the reflected light from the light source are imaged within the optical arrangement into a common plane.

2. Device for carrying out the method according to claim 1 comprising tubes secured on the two wheel discs of a wheel axle, a plane mirror and objectives mounted on one of the wheel discs and arranged in the vicinity of the end of the tubes, characterized in that one end of the first tube (1) is closed by an objective (6), for said tube in the vicinity of the objective (6) a plane mirror (7) is provided at an angle of 45° to the longitudinal axis of the tube (1), opposite which mirror a second plane mirror (8) is provided in optical connection with the first and arranged likewise at an angle of 45° to the longitudinal axis of the second tube (2), and on this end of the second tube (2) a plane mirror (9) at right angles to the longitudinal axis of the said tube and having a reflection of 50–70% and a further objective (11) are arranged.

3. Device for carrying out the method according to claim 1 comprising tubes secured on the wheel discs of the wheels of the wheel axles, a heated filament mounted in the one tube, objectives arranged in the vicinity of the one end of the tubes, and a single plane mirror, characterized in that the heated filament (5) is provided on the one end of the first tube (1), the opposite end of this tube (1) is delimited by the objective (6) and the second objective (11) thus located in optical connection is arranged on the end of the second tube (2) behind the plane mirror (9) having a reflection of 50–70%.

4. Device for carrying out the method according to claim 1 comprising perpendicularly arranged tube, heated filament, plane mirror and objectives, characterized in that on the upper end of the tube (1) the heated filament (5) is arranged and the lower end of this tube (1) is delimited by the objective (6) beneath which a plane mirror (16) is arranged suspended in the manner of a pendulum.

## Revendications

1. Méthode pour mesurer la géométrie du mécanisme de roulement de véhicules à moteur, avec un appareil optique fixé sur le mécanisme de roulement, appareil qui comporte une source lumineuse produisant un rayon lumineux qui est transformé à l'aide d'un système optique, caractérisée par le fait que le rayon lumineux produit par la source lumineuse (5) est transformé par le système optique (6, 7, 8, 9) en un faisceau parallèle, faisceau qui est ensuite réfléchi en lui-même, et que la lumière directe et la lumière réfléchie de la source lumineuse sont projetées dans un plan commun à l'intérieur de l'appareil optique.

2. Dispositif pour mettre en œuvre la méthode selon la revendication 1, comportant des tubes fixés sur les deux disques de roue d'un axe de roue, un miroir plan monté sur un des disques de roue et disposé au voisinage d'une des extrémités des tubes, et des objectifs, caractérisé par le fait que le premier tube (1) est obturé à une de ses extrémités par un objectif (6), qu'un miroir plan (7) est affecté au tube susmentionné, miroir plan qui est disposé au voisinage de l'objectif (6) et sous un angle de 45° par rapport à l'axe longitudinal du tube (1), qu'il est prévu en face du premier miroir plan (7) un deuxième miroir plan (8) qui est en relation optique avec le premier et qui est également disposé sous un angle de 45°, par rapport à l'axe longitudinal du deuxième tube (2), et qu'un miroir plan (9) ayant un coefficient de réflexion de 50 à 70% et perpendiculaire à l'axe longitudinal du deuxième tube (2), ainsi qu'un autre objectif (11), sont disposés à l'extrémité correspondante du deuxième tube (2).

3. Dispositif pour mettre en œuvre la méthode selon la revendication 1, comportant des tubes fixés sur les disques des roues de deux axes de roue, un filament incandescent monté dans l'un des tubes, des objectifs disposés au voisinage de l'une des extrémités des tubes, et un seul miroir plan, caractérisé par le fait que le filament incandescent (5) est disposé à l'une des extrémités du premier tube (1), que l'extrémité opposée de ce tube (1) est obturée par l'objectif (6), et que le deuxième objectif (11), qui est ainsi en relation optique avec l'objectif (6), est disposé à une extrémité du deuxième tube (2), derrière un miroir plan (9) ayant un coefficient de réflexion de 50 à 70%.

4. Dispositif pour mettre en œuvre la méthode selon la revendication 1, comportant un tube, un filament incandescent, un miroir plan et des objectifs disposés verticalement, caractérisé par le fait que le filament incandescent (5) est disposé à l'extrémité supérieure du tube (1), que l'extrémité inférieure de ce tube (1) et obturée par l'objectif (6), et qu'un miroir plan (16) suspendu pendulairement est disposé sous l'objectif (6).

Fig. 1.

Fig. 2.

Fig. 3.